# EUROPÄISCHE PATENTSCHRIFT

(11) **EP 2 199 148 B1**
(45) Veröffentlichungstag und Bekanntmachung des Hinweises auf die Patenterteilung: **13.04.2016**
(21) Anmeldenummer: 09179962.7
(22) Anmeldetag: 18.12.2009
(51) Int. Cl.: B60N 2/68

(54) **Sitzstruktur**
Seat structure
Structure de siège

(30) Priorität: 22.12.2008 DE 102008055103
(43) Veröffentlichungstag der Anmeldung: 23.06.2010
(73) Patentinhaber: Sitech Sitztechnik GmbH, 38442 Wolfsburg (DE)
(72) Erfinder: Czajkowski, Miroslaw, 38551, Ribbesbüttel (DE); Mamerow, Holger, 38528, Adenbüttel (DE)
(74) Vertreter: Gulde & Partner

(56) Entgegenhaltungen:
- DE-A1- 10 064 345
- DE-A1-102004 002 214
- DE-U1-202007 009 701
- US-A1- 2006 049 660
- US-A1- 2008 277 987

## Beschreibung

Die Erfindung betrifft eine Sitzstruktur, insbesondere eine Hintersitzlehnenstruktur, sowie ein Verfahren zur Herstellung der Sitzstruktur.

Sitzstrukturen der gattungsgemäßen Art sind bekannt. Eine oder mehrere Sitzlehnen bilden gemeinsam mit dem Sitzteil zumeist eine mehr oder weniger variable Rücksitzbank in einem Kraftfahrzeug. Die Rücksitzbänke umfassen somit mindestens ein Sitzteil und mindestens eine Sitzlehne. Mindestens die Sitzlehne ist zumeist geteilt ausgebildet und zur Vergrößerung eines Ladegutraumes des Kraftfahrzeuges umklappbar angeordnet. Bekannt ist beispielsweise eine Teilung der Sitzlehne 60/40%. Bekannt sind aber auch Teilungen 50/50% oder 40/20/40%. In Betriebsposition der Sitzlehne, bei der ein Insasse auf der Rücksitzbank aufsitzt, ist diese über wenigstens einen Befestigungspunkt fest mit einer Kraftfahrzeug-Karosserie verbunden. Hierzu sind lösbare Rastverbindungen, Schnappverbindungen oder dergleichen bekannt.

Zur Gewährleistung der Fahrzeuginsassensicherheit müssen die Sitzlehnen eine Mindeststeifigkeit aufweisen. Insbesondere bei einem Frontalaufprall des Kraftfahrzeuges wirken auf die Sitzlehne erhebliche in oder entgegen der Fahrtrichtung gerichtete Kräfte. Vor allem, wenn in der Sitzlehne integrierte Sicherheitsgurte vorgesehen sind, greifen an der Sitzlehnenoberkante erhebliche Gurtkräfte an. Um eine Insassensicherheit zu gewährleisten, darf die Sitzlehne nach geltenden Vorschriften im Crashfall nur bis zu einem bestimmten Betrag, der zwischen 300 und 400 mm liegt, in Fahrtrichtung deformiert werden. Dies ist zur Aufrechterhaltung eines sogenannten Überlebensraumes für die Fahrzeuginsassen notwendig.

Um die notwendige Festigkeit der Sitzlehne zu erreichen, ist es bekannt, einen als Träger dienenden Grundkörper der Rückenlehne beispielsweise aus einem verstärkten Stahlblech zu fertigen. Zur weiteren Erhöhung der möglichen Kraftaufnahme der Sitzlehne ist es weiterhin bekannt, Versteifungen innerhalb des Grundkörpers oder auf dem Grundkörper anzuordnen, damit die Kräfte vom Grundkörper selbst und den zusätzlichen Versteifungselementen aufgenommen werden können.

K 16249 EP
Als Stand der Technik werden die Druckschriften DE 20 2007 009 701 U1; US 2008/277987 A1; US 2006/049660 A1; DE 10 2004 002 214 A1 sowie DE 100 64 345 A1 genannt.

Eine gattungsgemässe Sitzstruktur und ein Verfahren zur Herstellung einer solchen Sitzstruktur ist aus dem Dokument DE202007009701 U1 bekannt.

Der Erfindung liegt die Aufgabe zugrunde, eine Klebeverbindung für eine Sitzstruktur, insbesondere für eine Sitzstruktur einer Hintersitzanlage umfassend eine Sitzlehne und/oder ein Sitzteil, der gattungsgemäßen Art zu schaffen, die mit ihrer Festigkeit, insbesondere ihrer Steifigkeit, die Fahrzeuginsassensicherheit berücksichtigt beziehungsweise verbessert, ein geringes Gewicht aufweist und dabei möglichst leicht zu fertigen ist.

Die Erfindung geht von einer Sitzstruktur aus, welche eine Sitzlehne und/oder ein Sitzteil aufweist, wobei die Sitzlehne und/oder das Sitzteil mindestens ein als Grundkörper ausgebildetes flächiges Element und einen den mindestens einen Grundkörper versteifenden Rahmen umfasst, wobei der jeweilige mindestens eine Rahmen aus Profilstahl und der mindestens eine Grundkörper aus einem Leichtbaumaterial gefertigt sind, wobei der mindestens eine Rahmen und der mindestens eine Grundkörper über mindestens eine Klebeverbindung miteinander verbunden sind.

Die oben genannte Aufgabe wird in Verbindung mit den genannten Merkmalen des Oberbegriffs des Patentanspruchs 1 dadurch gelöst, dass die Klebeverbindung als profilartige Erhöhung in der Art einer Kleberaupe ausgebildet ist, in die der Rahmen eingetaucht ist, wodurch über die Klebeverbindung eine dauerbeständige Verbindung und eine Aufnahme von Crashkräften in der Art eines Deformationselementes bewirkbar ist.

In bevorzugter Ausgestaltung der Erfindung sorgt die Klebeverbindung für eine dauerbeständige Verbindung der unterschiedlichen Werkstoffe des Rahmens und des Grundkörpers.

In einer bevorzugten ersten Ausführungsform sind der mindestens eine Rahmen aus dem Profilstahl und der mindestens eine - als Leichtbaumaterial - aus einem Leichtmetall-Blech ausgebildete Grundkörper über mindestens eine, zwischen Rahmen und Grundkörper, ausgeführte, die unterschiedlichen Werkstoffe (Stahl und Leichtmetall) galvanisch trennende, Klebeverbindung in der Art der Kleberaupe miteinander verbunden.

In bevorzugter Ausgestaltung der Erfindung ist der aus einem Leichtmetall-Blech gefertigte mindestens eine Grundkörper der Sitzstruktur ein Aluminium-Blech oder Magnesium-Blech beziehungsweise ein aus einer Aluminiumlegierung oder Magnesiumlegierung bestehendes Blech.

In einer bevorzugten zweiten Ausführungsform sind der mindestens eine Rahmen aus dem Profilstahl und der mindestens eine - als Leichtbaumaterial - aus einer Leichtbauplatte ausgebildete Grundkörper, über mindestens eine, zwischen den unterschiedlichen Werkstoffen des Rahmens und des Grundkörpers ausgeführte, Klebeverbindung in der Art der Kleberaupe miteinander verbunden.

In bevorzugter Ausgestaltung der Erfindung ist der aus einer Leichtbauplatte gefertigte mindestens eine Grundkörper eine Kunststoffplatte oder eine Kunststoffplatte mit Faserverstärkung, eine Naturfaserplatte oder eine verstärkte Naturfaserplatte oder eine Sandwichplatte aus mindestens einer Kunststoff- und mindestens einer Naturfaserplatte, die gegebenenfalls in verstärkter Ausführung zu einer Sandwichplatte verbunden sind.

Im Falle der Herstellung der Sitzstruktur, bei welcher der jeweilige mindestens eine Rahmen aus Profilstahl und der mindestens eine Grundkörper aus einem Leichtmetall-Blech gefertigt wird, stellt die profilartige Erhöhung in der Art der Kleberaupe nicht nur die eigentliche Klebeverbindung dar, sondern ist wie bei der schichtenartigen Klebeverbindung gleichzeitig das galvanisch trennende Zwischenprofil zwischen den Werkstoffen Stahl und Leichtmetall (Al, Mg oder Al, Mg-Legierung), welches in vorteilhafter Weise durch die profilartige Erhöhung in der Art der Kleberaupe eine besonders sichere Trennung ermöglicht.

In bevorzugter Ausgestaltung der Erfindung sind der aus Profilstahl gefertigte Rahmen und der mindestens eine aus einem Leichtmetall-Blech oder einer Leichtbauplatte gefertigte Grundkörper auf die als profilartige Erhöhung ausgebildete Klebeverbindung in die als profilartige Erhöhung in der Art der Kleberaupe ausgebildete Klebeverbindung eingetaucht.

Insbesondere um eine Wirkung als Deformationselement und die Aufnahme von Crashkräften zu erhöhen, wird das Eintauchen des jeweiligen Rahmens in die profilartige Erhöhung in der Art der Kleberaupe vorgeschlagen, da dadurch größere einwirkende Kräfte aufgrund einer vergrößerten Verbindungsflächen zwischen Rahmen und Grundkörper in der so ausgebildeten Klebeverbindung absorbiert werden können. Die Haftfestigkeit zwischen Rahmen und Grundkörper und somit die Absorptionsfähigkeit von einwirkenden Kräften wird erhöht.

In weiterer Ausgestaltung der Erfindung sind der mindestens eine Grundkörper und der zugehörige Rahmen Teil einer Sitzlehne und/oder eines Sitzteiles. Dabei werden typischer Weise 20/40/50/60% oder 100% Sitzlehnen und/oder Sitzteile vorgesehen, die jeweils für sich genommen eine Art Modul darstellen. Eine Hintersitzanlagenstruktur besteht somit mindestens aus zwei Modulen - aus einem 100% Sitzlehnen-Modul und einem 100% Sitzteil-Module.

Gemäß dieser weiteren Ausgestaltung werden für die jeweiligen Module gleichartige, vorgefertigte Grundkörper und gleichartige, vorgefertigte Rahmen - beispielsweise die nachfolgend beschriebenen sogenannten Zusammenbau-Profilstahl-Rahmen - aus einer Art Baukasten für die Komplettierung der Hintersitzanlagenstruktur eingesetzt.

Ferner sind bevorzugt in und/oder an dem Profilstahl-Rahmen der Sitzlehne und/oder auch des Sitzteiles Funktionselemente angeordnet. Dabei ist der mindestens eine Profilstahl-Rahmen der Sitzlehne und/oder des Sitzteiles aus Rahmenelementen zu einem Zusammenbau-Profilstahl-Rahmen zusammengesetzt, wobei die Rahmenelemente vor dem Verkleben mit dem Grundkörper miteinander zu dem Zusammenbau-Profilstahl-Rahmen verbunden, insbesondere verschweißt, verclincht, vernietet oder verschraubt und/oder zusammengesteckt, werden.

In weiterer bevorzugter Ausgestaltung der Erfindung ist einem bestimmten Rahmenelement des späteren Zusammenbau-Profilstahl-Rahmens mindestens eines der Funktionselemente, auf die in der Beschreibung noch näher eingegangen wird, zugeordnet.

Zur Herstellung einer Hintersitzanlage, die mindestens eine Sitzlehne und/oder ein Sitzteil umfasst, wobei die Sitzlehne und/oder das Sitzteil derart ausgebildet sind, dass sie jeweils einen Grundkörper als flächiges Element und einen mit dem Grundkörper verbundenen versteifenden Rahmen aufweisen, wird ein Verfahren durchgeführt, bei welchem im Bereich der Verbindungsfläche zwischen dem als Profilstahl-Rahmen und/oder dem aus einem Leichtbaumaterial [Leichtmetall-Blech oder Leichtbauplatte] ausgebildeten Grundkörper ein gleichzeitig eine galvanische Trennung bewirkender Kleber unter Ausbildung einer Klebeverbindung als profilartige Erhöhung in der Art eine Kleberaupe aufgetragen wird.

Der Kleber wird im Bereich der Verbindungsflächen des mindestens einen Profilstahl-Rahmens und des mindestens einen, aus dem Leichtbaumaterial hergestellten, Grundkörpers über die profilartige Erhöhung als Kleberaupe ausgebildet, wodurch die profilartige Erhöhung neben der dauerbeständigen Verbindung der beiden Teile die Aufnahme von Crashkräften in der Art eines Deformationselementes ermöglicht.

Nach dem Auftrag des Klebers werden der Profilstahl-Rahmen und das Leichtmetall-Blech oder die Leichtbauplatte zueinander positioniert und zusammengefügt. Zur Positionierung des Rahmens relativ zum Grundkörper weist der jeweilige mindestens eine Profilstahl-Rahmen und/oder der mindestens eine Grundkörper Positionierhilfen beziehungsweise Zentrierhilfen auf.

Zu dem Verfahren gehört alternativ ein vorgelagerter Fertigungsschritt, nämlich, dass der Profilstahl-Rahmen der Sitzlehne und/oder des Sitzteiles aus Rahmenelementen zu den verschiedenen Modulen [20/40/50/60%-Modul oder 100%-Modul] zu einem Zusammenbau-Profilstahl-Rahmen zusammensetzbar ist, wobei die einzelnen Rahmenelemente in diesem vorgelagerten Verfahrensschritt vor dem Verkleben mit dem Grundkörper miteinander verbunden, insbesondere verschweißt, verclincht, vernietet oder verschraubt und/oder zusammengesteckt, werden.

Dabei verfügen die einzelnen Rahmenelemente in vorteilhafter Weise bereits über die im Bereich der Hintersitzanlage benötigten Funktionselemente, wie zum Beispiel mindestens ein Mittellager, mindestens ein Außenlager, mindestens ein Schloss zur Ankopplung an die Karosserie, mindestens einen Gurtroller, Kopfstützenaufnahmen, Befestigungselemente für eine Netztrennwand, Top-Tether Anbindungen zur Anbringung von Kindersitzen und dergleichen. Der Grundkörper weist dabei beispielsweise ebenfalls bereits als Funktionselement eine vorgefertigte Öffnung für einen Skisack oder dergleichen auf.

Der aus verschiedenen Rahmenelementen ausgebildete Zusammenbau-Profilstahl-Rahmen und das zugehörige Leichtmetall-Blech oder die Leichtbauplatte als Grundkörper werden nach dem Zusammenfügen der beiden Bauteile in der gewünschten Position während des Klebe- und Aushärtungsvorganges zumindest vorübergehend behelfsweise durch Clinchen, Stanznieten, Verschraubungen oder durch Zusammenstecken verbunden, wobei die verwendeten Verbindungselemente speziell beschichtet sind, um im Falle der Verbindung zwischen Profilstahl-Rahmen und Leichtmetall-Blech eine vollständige galvanische Trennung zu gewährleisten.

Weitere bevorzugte Ausgestaltungen der Erfindung ergeben sich aus den übrigen, in den Unteransprüchen genannten Merkmalen und aus dem Ausführungsbeispiel.

Die Erfindung wird nachfolgend in einem Ausführungsbeispiel anhand der zugehörigen Zeichnungen näher erläutert. Es zeigen:
- Figur 1: eine perspektivische Ansicht einer Hintersitzanlagenstruktur von vorn mit einer typischen 60/40% Teilung [60/40%Modul] der Sitzlehne;
- Figur 2: eine Vorderansicht des 60%-Modules der Sitzlehne der Hintersitzanlagenstruktur nach Figur 1;
- Figuren 3A und 3B: einen Schnitt A-A durch einen Rahmen und einen Grundkörper der Sitzlehne der Hintersitzanlagenstruktur mit einem auf eine raupenartige Klebeverbindung zwischen Grundkörper und Rahmen aufgesetzten und einem in die Klebeverbindung eingetauchten Rahmen; und
- Figuren 4A bis 4E: weitere mögliche Formen des Rahmens gemäß Schnitt A-A Figur 2.

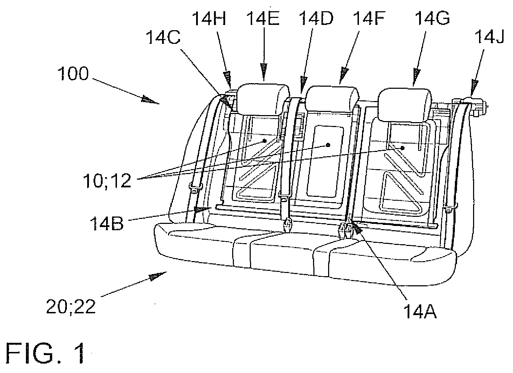

Figur 1 zeigt eine Hintersitzanlagenstruktur nachfolgend nur noch als Hintersitzanlage 100 bezeichnet, die beispielsweise ein Sitzteil 20 als 100%-Modul und eine Sitzlehne 10 als 60/40%-Modul aufweist. Die Sitzlehne 10 befindet sich in Figur 1 in Betriebsposition, bei der beide Modulteile 60/40% nach oben geklappt sind und die Sitzlehne 10 über ein Schloss 14C mit der nicht dargestellten Karosserie verbunden ist.

Figur 1 zeigt weiter, dass das 60%-Modul ein Mittellager 14A und ein Außenlager 14B aufweist.

Zudem sind die Kopfstützenaufnahmen 14E und 14F in dem 60%-Modul dargestellt, wobei das 40%-Modul ebenfalls eine Kopfstützenaufnahme 14G aufweist. Ein Gurtroller 14D ist insbesondere an der Oberkante des 60%-Modules angeordnet. Die weiteren Gurtroller 14H, 14J befinden sich seitlich des 60%-Modules (14H-links) beziehungsweise rechts des 40%-Modules (14J-rechts) vorzugsweise oberhalb der seitlichen Radhäuser, wodurch die Gurtkräfte dieser Gurtroller 14H, 14J nicht in die Sitzlehne 10 eingeleitet werden. Die Crashkräfte, die bei einem Crash in diese Gurtroller 14H, 14J eingeleitet werden, müssen somit bei der Auslegung der Sitzlehne 10 hinsichtlich ihrer Steifigkeit nicht beachtet werden.

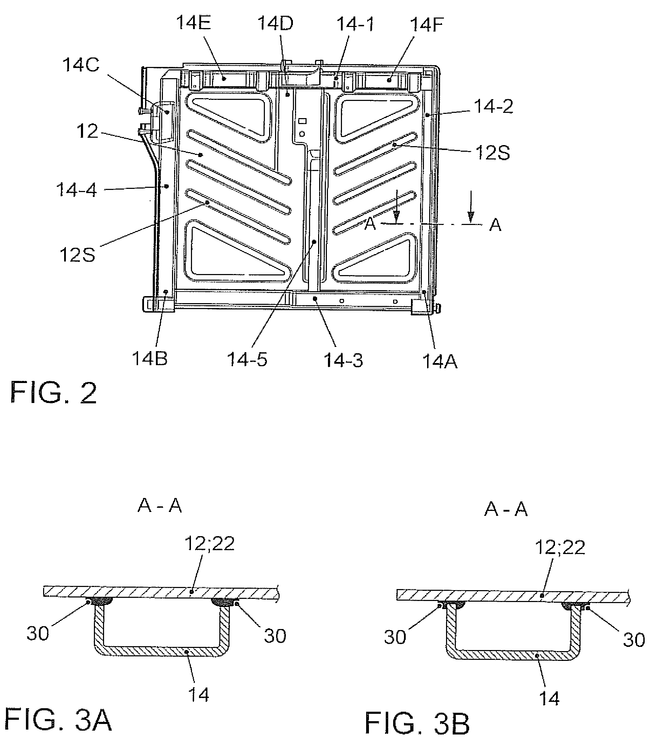

Figur 2 zeigt den Grundkörper 12 des 60%-Modules nach Figur 1, wobei der Grundkörper auf seiner dem Betrachter zugewandten Seite, auf der Vorderseite der Sitzlehne 10, einen Rahmen 14 aufweist.

Erfindungsgemäß ist der Grundkörper 12 in einer ersten Ausführungsform ein flächiges Blech aus einem Leichtmetallwerkstoff, wie Magnesium oder Aluminium beziehungsweise Legierungen davon.

In einer anderen zweiten Ausführungsform ist der Grundkörper eine flächige Leichtbauplatte aus einer Kunststoffplatte, eine Kunststoffplatte mit Faserverstärkung,
eine Naturfaserplatte, eine verstärkte Naturfaserplatte oder eine Sandwichplatte aus mindestens einer Kunststoff- und mindestens einer Naturfaserplatte, die jeweils oder nur eine davon gegebenenfalls verstärkt ausgeführt sind.

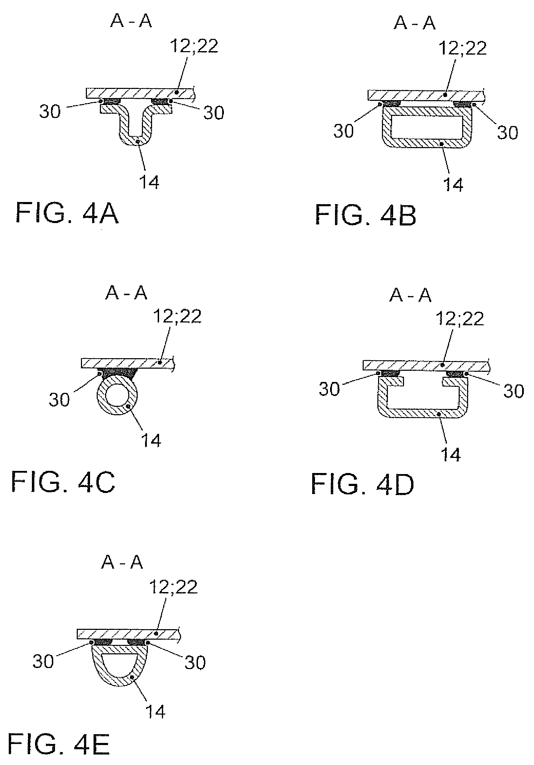

Der Rahmen 14 ist erfindungsgemäß ein Profilstahl-Rahmen, der passend zu dem 60%-Grundkörper 12 vorgefertigt ist. Zu diesem 60%-Grundkörper 12 gehört der entsprechende 60%-Profilstahl-Rahmen 14, wobei der Profilstahl-Rahmen 14 und der Grundkörper 12 erfindungsgemäß nach den Figuren 3A und 3B beziehungsweise nach den Figuren 4A, 4B, 4C, 4D und 4E miteinander verklebt werden.

Nach den Figuren 3A, 3B, 4A, 4B, 4C, 4D und 4E ist der mindestens eine Profilstahl-Rahmen 14 mit dem mindestens einen Grundkörper 12 über mindestens eine Klebeverbindung 30 verbunden, so dass zwischen den unterschiedlichen Werkstoffen eine dauerbeständige, korrosionsfreie Verbindung bewirkt wird.

In der ersten Ausführungsform, bei der ein Grundkörper 12 aus einem flächigen Blech aus einem Leichtmetallwerkstoff, wie Magnesium oder Aluminium beziehungsweise Legierungen davon, mit dem Rahmen 14 verklebt ist, stellt die Klebeverbindung 30 gleichzeitig die, die unterschiedlichen Werkstoffe (Stahl und Leichtmetalle Al, Mg) galvanisch trennende Schicht dar.

In den in den Figuren 3A, 3B, 4A, 4B, 4C, 4D und 4E dargestellten bevorzugten Ausgestaltungen ist nicht nur eine einfache Klebeschicht ausgebildet beziehungsweise dargestellt, sondern es ist eine profilartige Erhöhung als Klebeverbindung 30 ausgeführt und dargestellt, wodurch neben der dauerbeständigen, korrosionsfreien Verbindung der beiden unterschiedlichen Werkstoffe in der Klebeverbindung 30 eine Aufnahme von Crashkräften ermöglicht wird, da die profilartige Klebeverbindung 30 in der Art eines Deformationselementes wirkt. Die profilartige Klebeverbindung 30 als jeweils im Schnitt A-A nach Figur 2 dargestellte Kleberaupe ist entlang der Verbindungsflächen zwischen Profilstahl-Rahmen 14 und Grundkörper 12 ausgebildet.

Wie Figur 3A zeigt, ist der aus Profilstahl gefertigte Rahmen 14 auf einen, als Leichtmetall-Blech oder Leichtbauplatte gefertigten Grundkörper 12, 22 auf die als profilartige Erhöhung ausgebildete Klebeverbindung 30 aufgesetzt oder gemäß Figur 3B in die erfindungsgemäße als profilartige Erhöhung in der Art einer Kleberaupe ausgebildete Klebeverbindung 30 eingetaucht.

Die vorteilhafte Wirkung, der auch als Deformationselement fungierenden Klebeverbindung 30 wird durch das Eintauchen des jeweiligen Rahmens 14 in die profilartige Erhöhung der Klebeverbindung 30 noch erhöht, da aufgrund größerer Verbindungsflächen im Bereich des endseitigen Rahmens 14 innerhalb der Klebeverbindung 30 höhere Kräfte, insbesondere Crashkräfte in der Klebeverbindung 30 absorbiert werden können.

Die Figuren 3A, 3B, 4A, 4B, 4C, 4D und 4E zeigen jeweils - neben der Kleberaupe als profilartige Erhöhung - verschiedene Rahmenprofile 14, die zum Einsatz kommen können und hinsichtlich der realisierbaren Verbindungsflächen zwischen den Bauteilen, dem Grundkörper 12, 22 und dem Rahmen 14, unterschiedliche Haftfestigkeiten entfalten. Die Wirkung bei der Nutzung des Klebeverbindung 30 als Deformationselement hängt von dem gewählten Profil 14, der Verbindungsfläche der Klebeverbindung 30 zwischen Rahmen 14 und Klebeverbindung 30 sowie der Verbindungsfläche zwischen Grundkörper 12, 22 und Kleberaupe ab.

In Figur 3A ist ein aufgesetzter/aufgeklebter U-Profil-Rahmen 14 beziehungsweise in Figur 3B die erfindungsgemäße Ausgestaltung eines eingetauchten/eingeklebten U-Profils Rahmens 14 dargestellt.

In den Figuren 4A, 4B, 4C, 4D und 4E ist jeweils nur die Ausgestaltung eines aufgesetzten/aufgeklebten Rahmens 14 gezeigt, wobei die erfindungsgemäße Ausgestaltung des eingetauchten/eingeklebten Rahmen 14 nicht dargestellt ist, die wie bereits oben beschrieben die Haftfestigkeit und Adsorptionsfähigkeit der Klebeverbindung 30 aufgrund größerer Verbindungsflächen noch weiter erhöht wird.

Figur 4A zeigt einen Omega-Profil-Rahmen 14 mit durch das Omega-Profil erreichbarer hoher Verbindungsfläche der Klebeverbindung zwischen Rahmen 14 und Grundkörper 12, 22.

Figur 4B zeigt ein Rechteckprofil und Figur 4C ein Rundprofil, welche ebenfalls eine große Verbindungsfläche zwischen Rahmen 14 und Grundkörper 12, 22 bieten.

In Figur 4D ist ein C-Profil beziehungsweise in Figur 4E ein D-Profil dargestellt.

Die unterschiedlichen Profile werden in Abhängigkeit der in der Sitzstruktur, insbesondere der Hintersitzanlage 100 zu erwartenden Kräfte ausgewählt. Dabei können beispielsweise in der Sitzlehne 10 der Hintersitzanlage 100 andere Profile als in dem Sitzteil 20 der Hintersitzanlage 100 verwendet werden.

Dies betrifft auch die Kleberverbindung 30. Beispielsweise können durch die im Crashfall in das Sitzteil 20 geringeren eingeleiteten Kräfte nur einfache schichtartige Klebeverbindungen 30 zwischen Grundkörper 22 und Rahmen 14 ausgeführt werden, während in der Sitzlehne 10 der Hintersitzstruktur als Klebeverbindung 30 profilartige Klebeverbindungen 30 zwischen Grundkörper 12 und Rahmen 14 ausgeführt werden, da hier im Crashfall die höheren, in den Grundkörper 12 der Sitzlehne 10 eingeleiteten Kräfte zu erwarten sind.

Die Herstellung der Sitzstruktur, erläutert am Beispiel eines 60%-Modules einer Hintersitzlehne, findet also durch Auftrag des Klebers unter Ausbildung einer Klebeverbindung 30 während des Klebvorganges auf den Profilstahl-Rahmen 14 und/oder das Leichtmetall-Blech oder die Leichtbauplatte als Grundkörper 12 statt, wobei im Bereich der Verbindungsfläche entweder eine Klebeschicht oder eine profilartig erhöhte Klebeverbindung 30 als Kleberaupe oder dergleichen ausgebildet wird.

Anschließend werden der Profilstahl-Rahmen 14 und das Leichtmetall-Blech zueinander positioniert, wobei entweder der Profilstahlrahmen und/oder das Leichtmetall-Blech oder die Leichtbauplatte über Positionierhilfen und Zentrierhilfen verfügt/verfügen.

Profilstahl-Rahmen 14 und Grundkörper 12, 22 - Leichtmetall-Blech oder Leichtbauplatte -werden zusammengefügt und hilfsweise zur Herstellung der dauerhaften Klebeverbindung 30, insbesondere zur Beibehaltung der vorhergehenden Positionierung der Bauteile zueinander, durch Clinchen, Stanznieten oder Verschrauben miteinander verbunden, wobei die jeweiligen Verbindungselemente entsprechend der Verbindungsart speziell beschichtet sind, um eine galvanische Trennung von Profilstahl-Rahmen 14 und Leichtmetall-Blech zu gewährleisten.

Bevorzugt sind die jeweiligen Module, beispielsweise das 60%-Modul nach Figur 2, aus vorgefertigten Rahmenelementen 14-1, 14-2, 14-3, 14-4, 14-5, aus einem Zusammenbau-Profilstahl-Rahmen 14 und einem zugehörigen Grundkörper 12 ausbildbar.

Nach Figur 2 umfasst der Zusammenbau-Profilstahl-Rahmen 14 in Betriebsposition der Sitzlehne 10 drei vertikale Rahmenelemente 14-2, 14-4 und 14-5. Der Zusammenbau-Profilstahl-Rahmen 14 weist ferner zwei horizontale Rahmenelemente 14-1, 14-3 auf. Das obere horizontale Rahmenelement 14-1 weist bereits Funktionselemente 14E, 14F, nämlich die Kopfstützenaufnahmen des 60%-Modules der Sitzlehne 10, auf.

Das in Figur 2 linke vertikale Rahmenelement 14-4 verfügt bereits über ein Schloss zur Anbindung der Sitzlehne 10 an die Karosserie und über ein Außenlager 14B, mittels dem die Sitzlehne 10 in der Karosserie gelagert wird.

Das rechte vertikale Rahmenelement 14-2 verfügt über ein Mittellager 14A, mittels dem die Sitzlehne 10 andererseits in der Karosserie schwenkbar gelagert ist.

Das in dieser Ausgestaltung dritte vertikale Rahmenelement 14-5 führt zu einer zusätzlichen Versteifung des 60%-Modules der Sitzlehne 10 als Teil der Hintersitzlehne 100.

Erfindungsgemäß können durch diese Zusammenstellung von Rahmenelementen 14-1, 14-2, 14-3, 14-4, 14-5 auch andere Sitzlehnenmodule anderer Größe hergestellt werden. Beispielsweise ist bei einem 40%-Modul wiederum das linke beziehungsweise rechte vertikale Rahmenelement 14-2, 14-4 gleichermaßen verwendbar. Dadurch besitzt das 40%-Modul bereits das Schloss gemäß Figur 2 (Bezugszeichen 14C) und die Mittel- beziehungsweise Außenlager gemäß Figur 2 (Bezugszeichen 14A, 14B).

Als unteres horizontales Rahmenelement 14-3 würde ein kürzeres Rahmenelement und als oberes horizontales Rahmenelement 14-1 ebenfalls ein kürzeres Rahmenelement mit einer bereits angeordneten nicht näher dargestellten Kopfstützenaufnahme 14G in dem oberen horizontalen Rahmenelement 14-1 verwendet werden. Dieses obere horizontale Rahmenelement kann dann bereits, anders als in der Figur 2 gezeigt, einen Gurtroller aufweisen.

In der gleichen Art und Weise können andere Modul-Sitzlehnen in anderen Größen aus den typisierten Rahmenelementen 14-1 bis 14-5 zusammengestellt werden, wobei jeweils ein vorgefertigter Grundkörper 12 passend zu dem Profilstahl-Rahmen beziehungsweise Zusammenbau-Profilstahl-Rahmen vorgefertigt wird.

Der aus einem Leichtmetall-Blech oder einer Leichtbauplatte ausgebildete Grundkörper 12, 22 für die Sitzlehne 10 oder das nicht näher dargestellte Sitzteil 20 weist alternativ zusätzlich, um die Stabilität und Versteifung der Bauteile der Hintersitzanlage 100 zu erhöhen, Versteifungssicken 12S auf.

Die verschiedenen Rahmenelemente 14-1, 14-2, 14-3, 14-4, 14-5 werden durch Verschweißen, Verclinchen, Vernieten oder Verschrauben und/oder durch Zusammenstecken miteinander verbunden und bilden den Zusammenbau-Profilstahl-Rahmen 14 der Sitzlehne 10 oder eines Sitzteiles 20 der Hintersitzanlage 100 aus.

Wie die Figuren 3A und 3B zeigen, wurde dabei beispielsweise ein U-Profil für die Herstellung des Profilstahl-Rahmens 14 verwendet, in dem dann die beschriebenen Funktionselemente ausgebildet beziehungsweise angeformt oder angebracht worden sind.

Nach der entsprechenden Positionierung beziehungsweise Zentrierung wird der Profil-Stahlrahmen 14 beziehungsweise der Zusammenbau-Profilstahl-Rahmen an der Fläche des Grundkörpers 12 aufgeklebt.

Der gegebenenfalls aus verschiedenen Rahmenelementen 14-1, 14-2, 14-3, 14-4, 14-5 ausgebildete Zusammenbau-Profilstahl-Rahmen 14 und das zugehörige Leichtmetall-Blech oder die Leichtbauplatte als Grundkörper 12, 22 werden nach dem Zusammenfügen der beiden Bauteile 12, 14 in der gewünschten Position während des Klebe- und Aushärtungsvorganges, zumindest vorübergehend, behelfsweise durch Clinchen, Stanznieten oder Verschraubungen und/oder durch Zusammenstecken verbunden, wobei die verwendeten Verbindungselemente in der ersten Ausführungsform, einer Verbindung von Profilstahl-Rahmen 14 und Leichtmetall-Blech als Grundkörper 12, 22 speziell beschichtet sind, um eine galvanische Trennung von Profilstahl-Rahmen 14 und Leichtmetall-Blech zu gewährleisten.

### Bezugszeichenliste

- 100: Hintersitzanlage
- 10: Sitzlehne
- 12: Grundkörper
- 12S: Versteifungssicken
- 20: Sitzteil
- 22: Grundkörper
- 14: Rahmen
- 14A: Mittellager
- 14B: Außenlager
- 14C: Schloss
- 14D: Gurtroller
- 14E: Kopfstützenaufnahme [links, 60%-Modul]
- 14F: Kopfstützenaufnahme [mitte, 60%-Modul]
- 14G: Kopfstützenaufnahme [rechts, 40%-Modul]
- 14H: Gurtroller
- 14J: Gurtroller
- 14-1: Rahmenelement
- 14-2: Rahmenelement
- 14-3: Rahmenelement
- 14-4: Rahmenelement
- 14-5: Rahmenelement
- 30: Klebeverbindung

## Patentansprüche

1. Sitzstruktur, welche eine Sitzlehne (10) und/oder ein Sitzteil (20) aufweist, wobei die Sitzlehne (10) und/oder das Sitzteil (20) mindestens ein als Grundkörper (12, 22) ausgebildetes flächiges Element und einen den mindestens einen Grundkörper versteifenden Rahmen (14) umfasst, wobei der jeweilige mindestens eine Rahmen (14) aus Profilstahl und der mindestens eine Grundkörper (12, 22) aus einem Leichtbaumaterial gefertigt sind, wobei der mindestens eine Rahmen (14) und der mindestens eine Grundkörper (12, 22) über mindestens eine Klebeverbindung (30) miteinander verbunden sind, **dadurch gekennzeichnet, dass** die Klebeverbindung (30) als profilartige Erhöhung in der Art einer Kleberaupe ausgebildet ist, in die der Rahmen (14) eingetaucht ist, wodurch über die Klebeverbindung (30) eine dauerbeständige Verbindung und eine Aufnahme von Crashkräften in der Art eines Deformationselementes bewirkbar ist.

2. Sitzstruktur nach Anspruch 1, **dadurch gekennzeichnet, dass** die Klebeverbindung (30) den mindestens einen Profilstahl-Rahmen (14) von dem mindestens einen als Leichtbaumaterial aus einem Leichtmetallblech ausgebildeten Grundkörper (12, 22) galvanisch trennt.

3. Sitzstruktur nach Anspruch 2, **dadurch gekennzeichnet, dass** der als Leichtbaumaterial aus einem Leichtmetall-Blech gefertigte mindestens eine Grundkörper (12, 22) ein Aluminium-Blech oder ein Magnesium-Blech ist.

4. Sitzstruktur nach Anspruch 1, **dadurch gekennzeichnet, dass** der mindestens eine als Leichtbaumaterial ausgebildete Grundkörper (12, 22) eine Leichtbauplatte ist.

5. Sitzstruktur nach Anspruch 1, **dadurch gekennzeichnet, dass** der als Leichtbaumaterial aus einer Leichtbauplatte gefertigte mindestens eine Grundkörper (12, 22)
- eine Kunststoffplatte oder eine Kunststoffplatte mit Faserverstärkung oder
- eine Naturfaserplatte oder eine verstärkte Naturfaserplatte oder
- eine Sandwichplatte aus mindestens einer - gegebenenfalls verstärkten - Kunststoff- und mindestens einer Naturfaserplatte
ist.

6. Sitzstruktur nach Anspruch 1, **dadurch gekennzeichnet, dass** der mindestens eine Profilstahl-Rahmen (14) der Sitzlehne (10) und/oder des Sitzteiles (20) aus vorgefertigten Rahmenelementen (14-1, 14-2, 14-3, 14-4, 14-5) zu einem Zusammenbau-Rahmen verbindbar ist, die vor dem Verkleben mit dem Grundkörper (12, 22) miteinander verbunden, insbesondere verschweißt, verclincht, vernietet oder verschraubt und/oder zusammengesteckt werden.

7. Sitzstruktur nach Anspruch 1 oder 6, **dadurch gekennzeichnet, dass** in und/oder an dem mindestens einen Profilstahl-Rahmen (14) der Sitzlehne (10) und/oder dem Sitzteil (20) mindestens ein Funktionselement (14A, 14B, 14C, 14D, 14E, 14F) angeordnet ist.

8. Sitzstruktur nach Anspruch 1 oder 6, **dadurch gekennzeichnet, dass** der mindestens eine Grundkörper (12, 22) der Sitzlehne (10) und/oder des Sitzteiles (20) aus einem vorgefertigten Leichtmetall-Blechteil nach Anspruch 2 oder aus einer Leichtbauplatte nach Anspruch 4 ausbildbar ist, wobei dem Leichtmetall-Blechteil oder der Leichtbauplatte mindestens ein Funktionselement (14A, 14B, 14C, 14D, 14E, 14F) zugeordnet ist.

9. Sitzstruktur nach Anspruch 1 oder 2, **dadurch gekennzeichnet, dass** der jeweilige mindestens eine aus einem Leichtmetall-Blech oder einer Leichtbauplatte ausgebildete Grundkörper (12, 22) Versteifungssicken (12S) oder der jeweilige mindestens eine aus einer Leichtbauplatte ausgebildete Grundkörper (12, 22) Versteifungen aus Fasern, insbesondere aus Kohle-, Glas-, Mineral-Fasern aufweist.

10. Herstellungsverfahren einer Sitzstruktur in der Art einer Sitzlehne (10) und/oder eines Sitzteiles (20), bei dem mindestens ein als Grundkörper (12, 22) ausgebildetes flächiges Element und ein den mindestens einen Grundkörper (12, 22) versteifender Rahmen (14) miteinander verbunden werden, wobei im Bereich der Verbindungsfläche zwischen dem Profilstahl-Rahmen (14) und/oder dem aus einem Leichtbaumaterial ausgebildeten Grundkörper (12, 22) ein Kleber unter Ausbildung einer Klebeverbindung (30) aufgetragen wird, und der Profilstahl-Rahmen (14) und der Grundkörper (12, 22) zueinander positioniert und zusammengefügt werden, **dadurch gekennzeichnet, dass** der Kleber im Bereich der Verbindungsflächen der Klebeverbindung (30) als profilartige Erhöhung in der Art einer Kleberaupe aufgetragen wird, in die der Rahmen (14) eingetaucht wird, wodurch eine dauerbeständige Verbindung zwischen dem mindestens einen Profilstahl-Rahmen (14) und dem aus einem Leichtbaumaterial ausgebildeten Grundkörper (12, 22) und eine Aufnahme von Crashkräften in der Art eines Deformationselementes ermöglicht wird.

11. Herstellungsverfahren nach Anspruch 10, **dadurch gekennzeichnet, dass** der mindestens eine Profilstahl-Rahmen (14) der Sitzlehne (10) und/oder des Sitzteiles (20) unter Ausbildung der Sitzstruktur nach Anspruch 6 aus Rahmenelementen (14-1, 14-2, 14-3, 14-4, 14-5) zu einem Zusammenbau-Rahmen verbunden wird, wobei die vorgefertigten Rahmenelemente (14-1, 14-2, 14-3, 14-4, 14-5) vor dem Verkleben mit dem als Leichtmetall-Blech ausgebildeten Grundkörper (12, 22) miteinander verbunden, insbesondere verschweißt, verclincht, vernietet oder verschraubt und/oder zusammengesteckt werden.

12. Herstellungsverfahren nach Anspruch 10 oder 11, **dadurch gekennzeichnet, dass** in und/oder an dem mindestens einen Profilstahl-Rahmen (14) und/oder dem mindestens einen Grundkörper (12, 22) mindestens ein Funktionselement (14A, 14B, 14C, 14D, 14E, 14F) angeordnet wird.

## Claims

1. Seat structure having a seat back (10) and/or a seat part (20), wherein the seat back (10) and/or the seat part (20) comprises at least one planar element formed as a main body (12, 22) and a frame (14) that stiffens the at least one main body, wherein the respective at least one frame (14) is made from profile steel and the at least one main body (12, 22) is made from a lightweight structural material, wherein the at least one frame (14) and the at least one main body (12, 22) are connected to one another by means of at least one adhesive connection (30), **characterized in that** the adhesive connection (30) is formed as a profile-like raised portion in the manner of an adhesive bead into which the frame (14) is plunged, whereby it is possible, by means of the adhesive connection (30), to create a durable connection and to take up crash forces in the manner of a deformation element.

2. Seat structure according to Claim 1, **characterized in that** the adhesive connection (30) galvanically separates the at least one profile steel frame (14) from the at least one main body (12, 22) that is formed from a lightweight metal sheet as lightweight structural material.

3. Seat structure according to Claim 2, **characterized in that** the at least one main body (12, 22) that is made from a lightweight metal sheet as lightweight structural material is an aluminium sheet or a magnesium sheet.

4. Seat structure according to Claim 1, **characterized in that** the at least one main body (12, 22) that is formed as lightweight structural material is a lightweight structural plate.

5. Seat structure according to Claim 1, **characterized in that** the at least one main body (12, 22) that is formed from a lightweight structural plate as lightweight structural material is
- a plastic plate or a fibre-reinforced plastic plate or
- a natural fibre plate or a reinforced natural fibre plate or
- a sandwich plate consisting of at least one possibly reinforced plastic plate and at least one natural fibre plate.

6. Seat structure according to Claim 1, **characterized in that** the at least one profile steel frame (14) of the seat back (10) and/or of the seat part (20) can be joined together from prefabricated frame elements (14-1, 14-2, 14-3, 14-4, 14-5) to give an assembled frame, which elements are connected to one another - in particular welded, clinched, riveted or screwed and/or plug-fitted - prior to adhesive bonding with the main body (12, 22).

7. Seat structure according to Claim 1 or 6, **characterized in that** at least one functional element (14A, 14B, 14C, 14D, 14E, 14F) is arranged in and/or on the at least one profile steel frame (14) of the seat back (10) and/or the seat part (20).

8. Seat structure according to Claim 1 or 6, **characterized in that** the at least one main body (12, 22) of the seat back (10) and/or of the seat part (20) can be formed from a prefabricated lightweight metal sheet part according to Claim 2 or from a lightweight structural plate according to Claim 4, wherein at least one functional element (14A, 14B, 14C, 14D, 14E, 14F) is assigned to the lightweight metal sheet part or the lightweight structural plate.

9. Seat structure according to Claim 1 or 2, **characterized in that** the respective at least one main body (12, 22) formed from a lightweight metal sheet or a lightweight structural plate has stiffening beads (12S) or the respective at least one main body (12, 22) formed from a lightweight structural plate has stiffening elements made of fibres, in particular carbon fibre, glass fibre, mineral fibre.

10. Production method for a seat structure in the manner of a seat back (10) and/or a seat part (20), in which at least one planar element formed as a main body (12, 22) and a frame (14) stiffening the at least one main body (12, 22) are connected to one another, wherein an adhesive is applied in the region of the connection surface between the profile steel frame (14) and/or the main body (12, 22) formed from a lightweight structural material, forming an adhesive connection (30), and the profile steel frame (14) and the main body (12, 22) are positioned with respect to one another and are joined together, **characterized in that** the adhesive is applied in the region of the connection surfaces of the adhesive connection (30) as a profile-like raised portion in the manner of an adhesive bead into which the frame (14) is plunged, thus creating a durable connection between the at least one profile steel frame (14) and the main body (12, 22) formed from a lightweight structural material and making it possible to take up crash forces in the manner of a deformation element.

11. Production method according to Claim 10, **characterized in that** the at least one profile steel frame (14) of the seat back (10) and/or of the seat part (20) is joined together, forming the seat structure according to Claim 6, from frame elements (14-1, 14-2, 14-3, 14-4, 14-5) to give an assembled frame, wherein the prefabricated frame elements (14-1, 14-2, 14-3, 14-4, 14-5) are connected to one another - in particular welded, clinched, riveted or screwed and/or plug-fitted - prior to adhesive bonding with the main body (12, 22) formed as lightweight metal sheet.

12. Production method according to Claim 10 or 11, **characterized in that** at least one functional element (14A, 14B, 14C, 14D, 14E, 14F) is arranged in and/or on the at least one profile steel frame (14) and/or the at least one main body (12, 22).

## Revendications

1. Structure de siège, qui présente un dossier (10) et/ou une assise (20), dans laquelle le dossier (10) et/ou l'assise (20) comprend au moins un élément plat réalisé sous la forme d'un corps de base (12, 22) et un cadre (14) raidissant ledit au moins un corps de base, dans laquelle ledit au moins un cadre respectif (14) est fabriqué en profilé d'acier et ledit au moins un corps de base (12, 22) est fabriqué en un matériau de construction léger, dans laquelle ledit au moins un cadre (14) et ledit au moins un corps de base (12, 22) sont assemblés l'un à l'autre par au moins un assemblage collé (30), **caractérisée en ce que** l'assemblage collé (30) est réalisé sous la forme d'une surélévation profilée à la manière d'un cordon de colle, dans lequel le cadre (14) est plongé, ce qui permet de réaliser, au moyen de l'assemblage collé (30), un assemblage durable et une reprise de forces de collision à la manière d'un élément de déformation.

2. Structure de siège selon la revendication 1, **caractérisée en ce que** l'assemblage collé (30) sépare électriquement ledit au moins un cadre en profilé d'acier (14) dudit au moins un corps de base (12, 22) réalisé en une tôle de métal léger comme matériau de construction léger.

3. Structure de siège selon la revendication 2, **caractérisée en ce que** ledit au moins un corps de base (12, 22) fabriqué en une tôle de métal léger comme matériau de construction léger est une tôle d'aluminium ou une tôle de magnésium.

4. Structure de siège selon la revendication 1, **caractérisée en ce que** ledit au moins un corps de base (12, 22) réalisé en matériau de construction léger est une plaque de construction légère.

5. Structure de siège selon la revendication 1, **caractérisée en ce que** ledit au moins un corps de base (12, 22) fabriqué en une plaque de construction légère comme matériau de construction léger est
- une plaque de matière plastique ou une plaque de matière plastique avec un renforcement de fibres ou
- une plaque de fibres naturelles ou une plaque de fibres naturelles renforcée ou
- une plaque stratifiée en au moins une plaque de matière plastique - éventuellement renforcée - et au moins une plaque de fibres naturelles.

6. Structure de siège selon la revendication 1, **caractérisée en ce que** ledit au moins un cadre en profilé d'acier (14) du dossier (10) et/ou de l'assise (20) peut être assemblé en un cadre de montage à partir d'éléments de cadre préfabriqués (14-1, 14-2, 14-3, 14-4, 14-5), qui sont assemblés les uns aux autres, en particulier soudés, estampés, rivés ou vissés et/ou emboîtés, avant le collage avec le corps de base (12, 22).

7. Structure de siège selon la revendication 1 ou 6, **caractérisée en ce qu'**au moins un élément fonctionnel (14A, 14B, 14C, 14D, 14E, 14F) est disposé dans et/ou sur ledit au moins un cadre en profilé d'acier (14) du dossier (10) et/ou de l'assise (20).

8. Structure de siège selon la revendication 1 ou 6, **caractérisée en ce que** ledit au moins un corps de base (12, 22) du dossier (10) et/ou de l'assise (20) peut être formé à partir d'une pièce de tôle en métal léger préfabriquée selon la revendication 2 ou en une plaque de construction légère selon la revendication 4, dans laquelle au moins un élément fonctionnel (14A, 14B, 14C, 14D, 14E, 14F) est associé à la pièce de tôle en métal léger ou à la plaque de construction légère.

9. Structure de siège selon la revendication 1 ou 2, **caractérisée en ce que** ledit au moins un corps de base respectif (12, 22) réalisé en une pièce de tôle en métal léger ou en une plaque de construction légère présente des moulures de renforcement (12S) ou ledit au moins un corps de base respectif (12, 22) réalisé en une plaque de construction légère présente des renforts en fibres, en particulier en fibres de carbone, de verre, minérales.

10. Procédé de fabrication d'une structure de siège à la manière d'un dossier (10) et/ou d'une assise (20), dans lequel on assemble l'un à l'autre au moins un élément plat réalisé en forme de corps de base (12, 22) et un cadre (14) raidissant ledit au moins un corps de base (12, 22), dans lequel on dépose, dans la région de la surface d'assemblage entre le cadre en profilé d'acier (14) et/ou ledit au moins un corps de base (12, 22) réalisé en un matériau de construction léger, une colle avec formation d'un assemblage collé (30), et on positionne et on assemble l'un à l'autre le cadre en profilé d'acier (14) et le corps de base (12, 22), **caractérisé en ce que** l'on dépose la colle dans la région des surfaces d'assemblage de l'assemblage collé (30) sous la forme d'une surélévation profilée à la manière d'un cordon de colle, dans lequel on plonge le cadre (14), ce qui permet d'obtenir un assemblage durable entre ledit au moins un cadre en profilé d'acier (14) et ledit au moins un corps de base (12, 22) réalisé en un matériau de construction léger ainsi qu'une reprise des forces de collision à la manière d'un élément de déformation.

11. Procédé de fabrication selon la revendication 10, **caractérisé en ce que** l'on assemble ledit au moins un cadre en profilé d'acier (14) du dossier (10) et/ou de l'assise (20) en un cadre de montage à partir d'éléments de cadre (14-1, 14-2, 14-3, 14-4, 14-5) avec formation de la structure de siège selon la revendication 6, dans lequel les éléments de cadre préfabriqués (14-1, 14-2, 14-3, 14-4, 14-5) sont assemblés les uns aux autres, en particulier soudés, estampés, rivés, vissés et/ou emboîtés, avant le collage avec le corps de base (12, 22) réalisé sous forme de tôle en métal léger.

12. Procédé de fabrication selon la revendication 10 ou 11, **caractérisé en ce que** l'on dispose au moins un élément fonctionnel (14A, 14B, 14C, 14D, 14E, 14F) dans et/ou sur ledit au moins un cadre en profilé d'acier (14) et/ou ledit au moins un corps de base (12, 22).
